# EUROPEAN PATENT APPLICATION

(11) **EP 0 525 209 A1**
(43) Date of publication of application: **03.02.1993**
(21) Application number: 92905104.3
(22) Date of filing: 19.02.1992
(51) Int. Cl.: A61C 11/08, A61C 11/00

(54) **ARTICULATOR**

(30) Priority: 20.02.1991 JP 7520/91 U; 08.08.1991 JP 62794/91 U
(71) Applicant: KODA, Yusaku, Hyogo 675-13 (JP)
(72) Inventor: KODA, Yusaku, Hyogo 675-13 (JP)
(74) Representative: Rackham, Anthony Charles
(86) International application number: JP9200176
(87) International publication number: WO9214418

(57) **Abstract**

An articulator to reproduce more exactly an actual positional relation between the upper and lower jaws of a patient and the center of opening/closing motion of said jaws at a place outside the patient's oral cavity, in which the distance between the model of upper jaw and a supporting shaft acting as a false joint and that between the lower jaw and said joint are variable. The articulator comprises: a setting frame (3) having a base plate (2) slidably fixed thereto; another setting frame (5) having a base plate (4) slidably fixed thereto; and a supporting member (7) for turnably connecting two setting frames (3 and 5) to each other. A position in which the models are fixed to the setting frames can be moved with respect to the supporting shaft acting as a false joint, whereby a prosthetic appliance having the center of opening/closing motion of the upper and lower jaws varied as desired can be fabricated.

## Description

### (Technical Field)

The present invention relates to an articulator to be used to prepare a dental product with reference to the patient's teeth for a dental restorative substance, a dental prosthetic appliance and an orthodontic appliance.

### (Background Art)

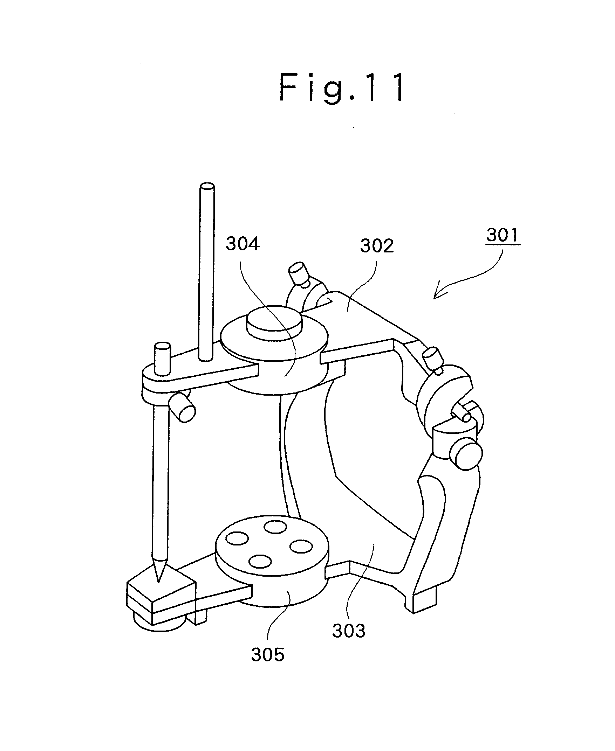

As shown in Fig.11, a conventional articulator 301 reproduce the occlusion state thereon by mounting the plaster models (not shown) of the upper and the lower jaws on the base plates 304, 305 supported respectively by the setting frames 302, 303 along with an occlusal relation printed on a wax bite or the like. Further, the conventional articulator reproduce the three-dimensional movement of the mandible at a place outside the oral cavity (i.e., on the articulator) by bite-taking a static/dynamic positional relation seemed to be appropriate in a mouth between the upper and the lower jaws with a check bite method or the like, recording the three-dimensional movement of the lower jaws of a organism, and adjusting the each function of the articulator.

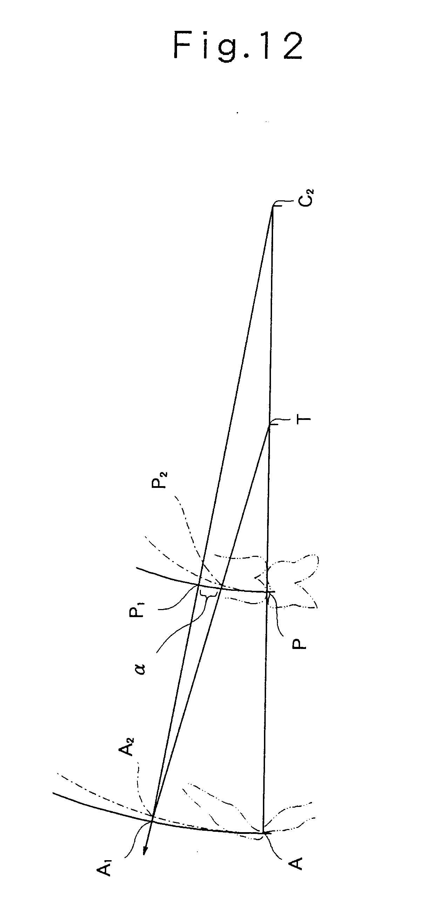

In the conventional articulator, although the three-dimensional movement with respect to the contact situation of the upper teeth model and the lower teeth model is able to reproduce precisely, to change the vertical dimension on the ariticulator had not been taken into consideration. The important factor at the time of changing the vertical dimension on the ariticulator is to correspond the distance from the center of the opening/closing motion of the model of the jaws to the models of the upper and the lower jaws respectively with the distance from the jaws of the organism to the opening/closing motion of the jaws. Unless said distances are not corresponded each other, in the case of changing the vertical dimension, the prosthetic appliance to be prepared to contact the all teeth on the articulator would not reproduce, in the oral cavity, the similar contact situation made on the articulator. For example, with reference to Fig. 12, when the real distance between the front tooth in the oral cavity and the motion center (C₂) of the jaws is A-C₂, the false teeth prepared by rising the vertical dimension of the cutting edge by the distance A-A, with the articulator, wherein the distance is A-T in the oral cavity, have the shorten height at the molar tooth portion (P) by the distance a (Pi -P₂). Accordingly, an articulator, wherein the position of the models of the upper and the lower jaws are movable in the front-to-back direction against the motion center (C₂) of the jaws, can be approximated the distance A-T to the distance A-C₂ without limit. In other words, there can be provided an articulator of reproducing the motion being identical with that of the organism. Therefore, the conventional articulator not having the device of the present invention for fine adjusting the distance between the model of the jaws and the simulated joint had neither been considered nor realized to change the vertical dimension on the articulator. To change the vertical dimension by the conventional articulator, a method further comprising the check-bite for the necessary vertical dimension in the patient's oral cavity and the mounting of the models of the jaws onto the articulator along with said check-bite would be required. In the method aforementioned, however, a lot of trouble such as re-bite-taking in the patient's oral cavity would be required and the patient therefore may feel troublesome and bear the load.

Further, suppose that the center of the opening/closing motion of the jaws of the organism is located on the hypothetical axis prepared by linking the joint-heads in the both jaw joints, there had been tried to determine the positional relation between the jaws and the jaw joints with an instrument such as face bow and reproduce on the articulator. However, when the change of the vertical dimension was going to be attempted actually, this method will also have to be started from the bite-taking aforementioned. Because, in spite of having been said that the center of the opening/closing motion of the jaws of the organism is located on the hypothetical axis of linking the joint-heads in the both jaw joints, a large number of artisan had already known that the motion of the lower jaw is not coincide with that of the knowledge above. Further, on the other hand, as if it responds to the above contradiction, a theory of existing the center of the opening/closing motion on the other position have been raised in the recent years.

### (Disclosure of the Invention)

The present invention is realized for the purpose of providing the articulator being capable of changing the relation of the distance between the jaws and the position of the center of the opening/closing motion of the human jaws after mounting the models of the jaws thereon, if the relation may be deduced precisely from an observation of the model or the organism. Further, unless the position of the center of the opening/closing motion of the human jaws may be deduced precisely, to determine the position corresponding with that of the organism would be enabled by preparing the several simulated prosthetic appliances by making use of an articulator having a device being able to change the position of the model of the jaws against the center. Further, it is an object to priovide an articulator being able to prepare the prosthetic appliance to be changed positively the position of the center, when the position of the center is diagnosed that it is not appropriate for the organism.

The present inventions are:
an articulator comprising,
a first setting frame for supporting the upper jaw model,
a base plate mounted slidably along with a longitudinal-direction of said first setting frame and having a fixing stand for placing the upper jaw model thereon,
a second setting frame for supporting the lower jaw model,
a base plate mounted slidably along with a longitudinal-direction of said second setting frame and having a fixing stand for placing the lower jaw model thereon, and
a supporting member for connecting the said first setting frame turnably with said second setting frame; and
an articulator wherein said first setting frame and said second setting frame respectively are further supported slidably against said supporting member.
By the elements recited above, at the time of changing the vertical dimension on the articulator, the position of the center of the opening/closing motion of the jaws would change easily to the desired position accoding to the operator's intention.

(Brief Description of the Drawings)
Fig.1 is a perspective view of the present invention.
Fig.2(a) is an enlarged sectional view taken on line A-A of Fig.1.
Fig.2(b) is an enlarged sectional view taken on line B-B of Fig.1.
Fig.3 is a side view illustrating the working condition of the present invention.
Fig.4 is a perspective view of the other embodiment of the present invention.
Fig.5(a) is an enlarged sectional view taken on line C-C of Fig.4.
Fig.5(b) is an enlarged sectional view taken on line D-D of Fig.4.
Fig.6 is a perspective view of the other embodiment of the present invention.
Fig.7 is an enlarged sectional view taken on line E-E of Fig.6.
Fig.8 is a perspective view of the other embodiment of the present invention.
Fig.9 is a perspective view of the other embodiment of the present invention.
Fig.10 is a perspective view of the other embodiment of the present invention.
Fig.11 is a perspective view of the conventional articulator.
Fig.12 is an illustration of the positional relation between the teeth and the center of the opening/closing motion of the jaws.

### (Best Modes for Carrying Out the Invention)

The preferred embodiments of the present invention are explained in the following by referring to the drawings attached hereto.

### Example 1: The Elements of The Articulator of The Present Invention

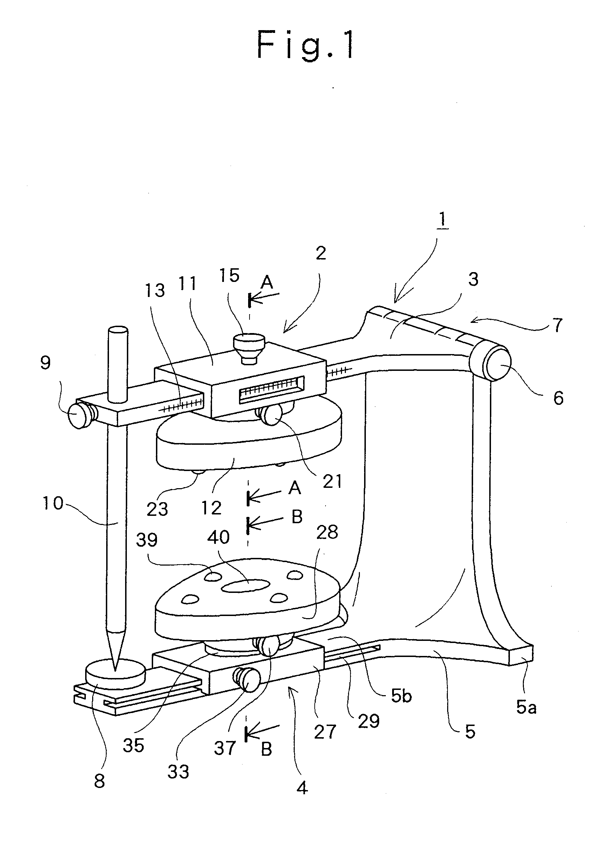

Fig.1 is a perspective view of the articulator 1 of the present invention comprising a first setting frame 3 having a base plate 2 mounted slidably along with a longitudinal-direction for supporting the upper jaw model, a second setting frame 5 having a base plate 4 mounted slidably along with a longitudinal-direction for supporting the lower jaw model, and a supporting member 7 having a supporting shaft 6 acting as a simulated joint for turnably connecting the frame 3 with the frame 5.

Further, a cutting pin 10, wherein a tip thereof is contacted with a cradle 8 mounted at the top portion of the frame 5 at the time of closing the articulator (i.e., occlusion state), being vertically slidable against the frame 3 and fixed on the frame 3 by a setscrew 9 is comprised. The frames 3 and 5 are connected and separated each other by inserting and removing the shaft (e.g., pin) 6 in and from the supporting member (e.g., hinge) 7.

The frame 3 is turnably connected with the frame 5 by the shaft acting as a simulated joint and have the plate 2 comprising a slide member 11 mounted slidably along with a longitudinal-direction and a fixing stand 12. The scale 13 is nicked at regular intervals along with a longitudinal-direction of a lateral side of the frame 3. Further, the pin 10 passes through the portion being adjacent to the top of the frame 3.

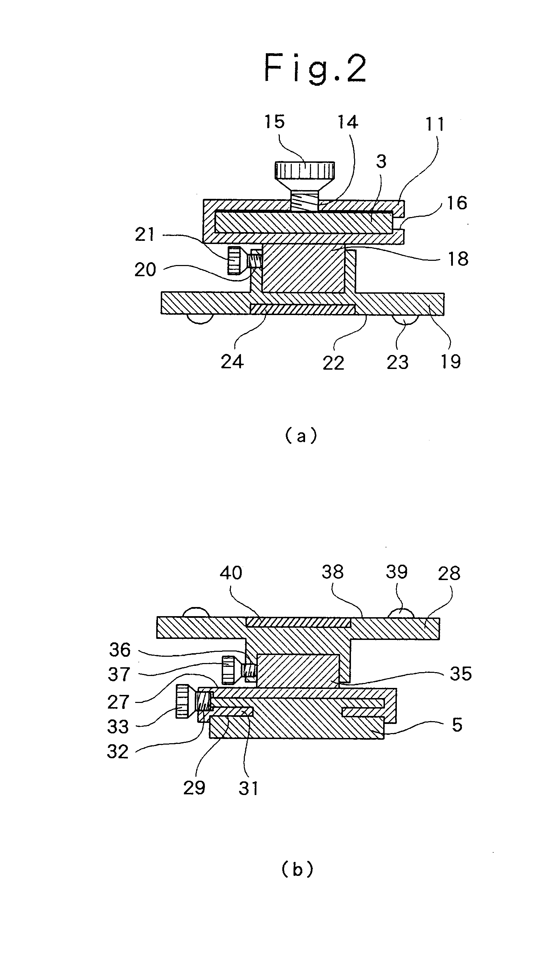

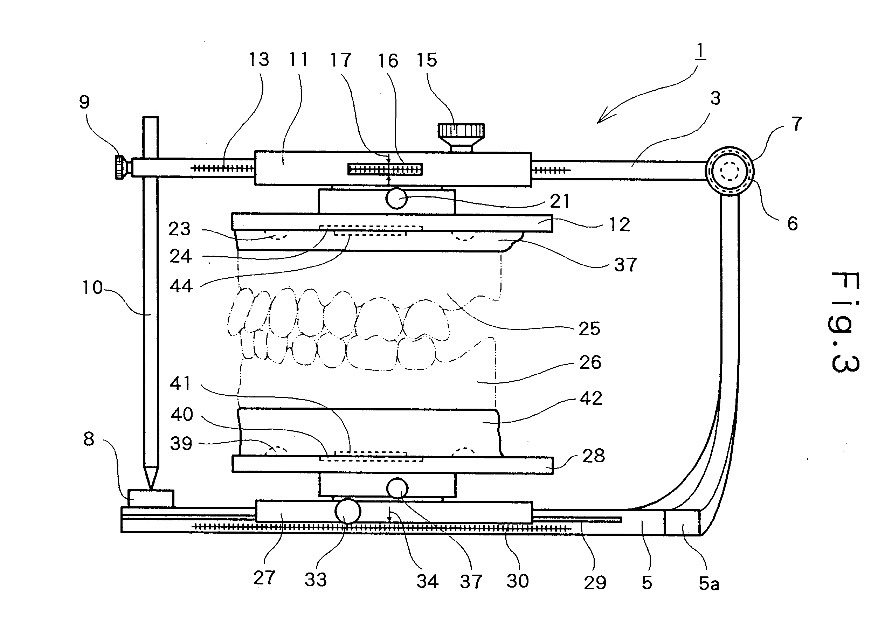

As shown in Fig.2, the frame 3 is sheathed like surrounding by the slide member 11 and have a structure to become the member 11 slidable along with a longitudinal-direction of the frame 3. Further, the member 11 (i.e., plate 2) can be fixed on the frame 3 at the optional position by tightening the setscrew 15 set in the tapped hole 14 passed through the member 11 from the top surface of the member 11. A mark 17 for indicating the position of the member 11 by corresponding the scale 13 nicked on the lateral side of the frame 3 through a window 16 is nicked on the lateral side of the member 11 (See, Fig.3).

Further, as shown in Fig.2(a), a prismatic support 18 connected to the member 11 is sheathed like surrounding by a fixing stand 19 being slidable along with a longitudinal-direction of the support 18. The stand 19 have the tapped hole 20 and a setscrew 21 to be set in the hole 20, and the support 18 and the stand 19 are connected each other by tightening the setscrew 21. The bottom surface 22 of the stand 19 have the multiple projections 23 and is buried a magnet 24 at the center portion of the surface 22 to become stable the jaw model mounted thereon. Accordingly, an adjustment of the distance from the model 26 to the model 25 mounted on the stand 19 would be carried out by sliding the stand 19 along with the support 18 and tightening the setscrew 21 at the optional position.

On the other hand, the frame 5 have a trapezoidal edge portion 5a and a flat portion 5b extended horizontally from the portion 5a to stably place the articulator 1 on the table such as a workbench. Further, as shown in Fig.1 and 2(b), the both lateral sides of the portion 5b have a concave grooves 29, 29 for receiving a slide member 27 and sliding the plate 4 comprising the member 27 and a fixing stand 28 along with a longitudinal-direction of the portion 5b and is nicked a scale 30 in parallel with the groove 29 at regular intervals at the lower side of the groove 29. The top portion of the frame 5 have the cradle 8 for receiving the pin 10.

As shown in Fig.2(b), the projecting portions 31, 31 projected inwardly into the portion 5b are fitted into the grooves 29, 29, thereby the member 27 can longitudinally slide on the portion 5b. The member 27 can be fixed on the portion 5b at the optional position by tightening the setscrew 33 set in the tapped hole 32 passed through the lateral side of the member 27. A mark 30 for indicating the position of the member 27 by corresponding the scale 30 nicked on the lateral side of the portion 5b. Further, a prismatic support 35 connected to the member 27 is sheathed like surrounding by a fixing stand 28 being slidable along with a longitudinal-direction of the support 35. The lateral side of a stand 28 have the tapped hole 36 and a setscrew 21 to be set in the hole 36, and the support 35 and the stand 28 are connected each other by tightening the setscrew 37. The top surface 38 of the stand 28 have the multiple prtojec- tions 39 and is buried a magnet 40 at the center portion of the surface 38 to become stable the jaw model mounted thereon. Accordingly, an adjustment of the distance from the model 25 to the model 26 mounted on the stand 28 would be carried out by sliding the stand 28 along with the support 35 and tightening the setscrew 37 at the optional position.

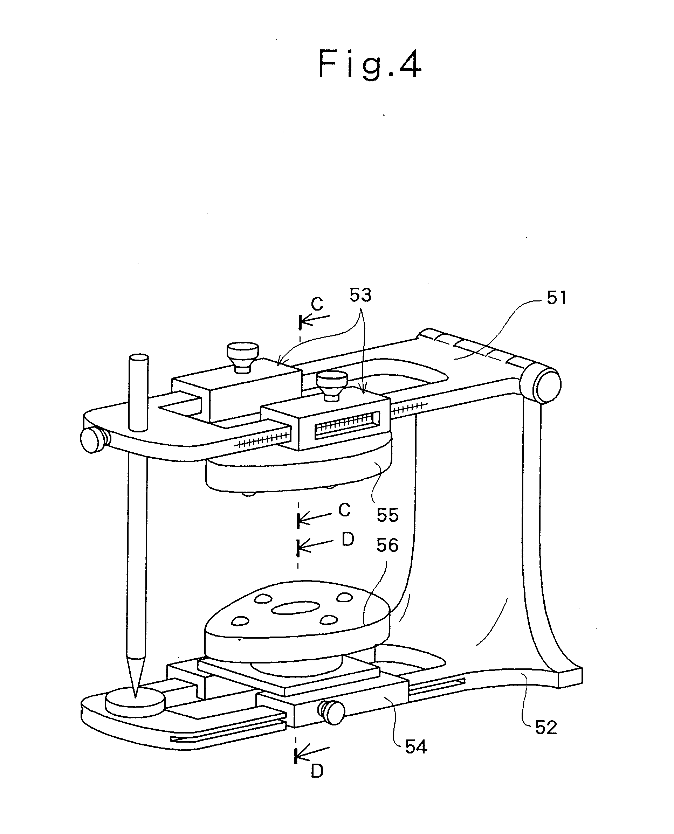

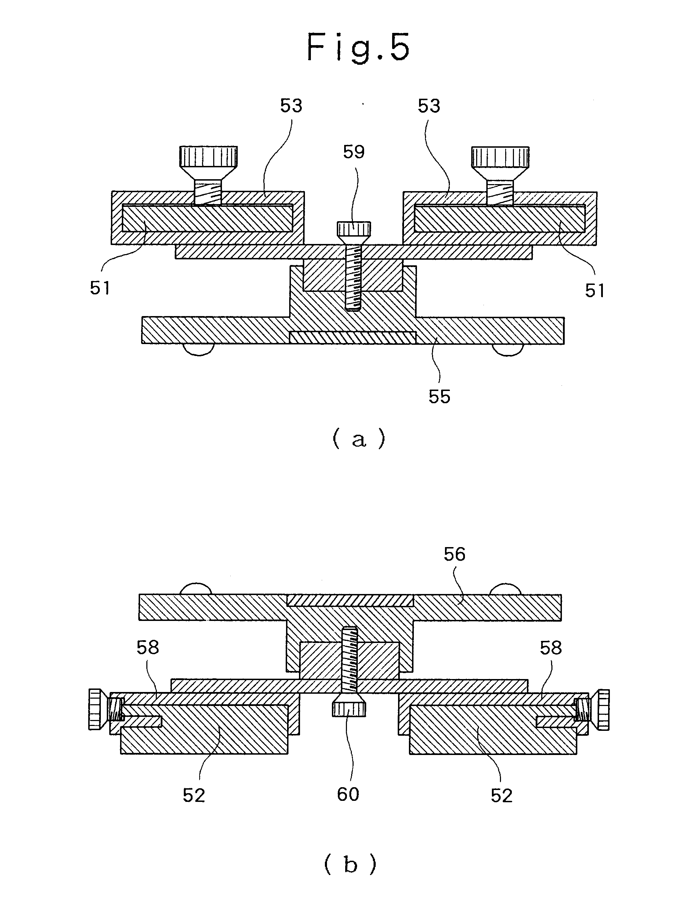

Fig.4 is a perspective view of the other embodiment of the present invention and there is no difference from the articulator 1 shown in Fig.1 except for the structure of sliding the plates 51 and 52 respectively along with a longitudinal-direction of the branched frames 51 and 52, and the structure of the stands 55 and 56 as shown in Figs.5 (a) and 5(b) being detachable the stands 55 and 56 from the slide members 57 and 58 by the setscrews 59 and 60.

### Example 2: The Elements of The Other Embodiment of The Articulator of The Present Invention

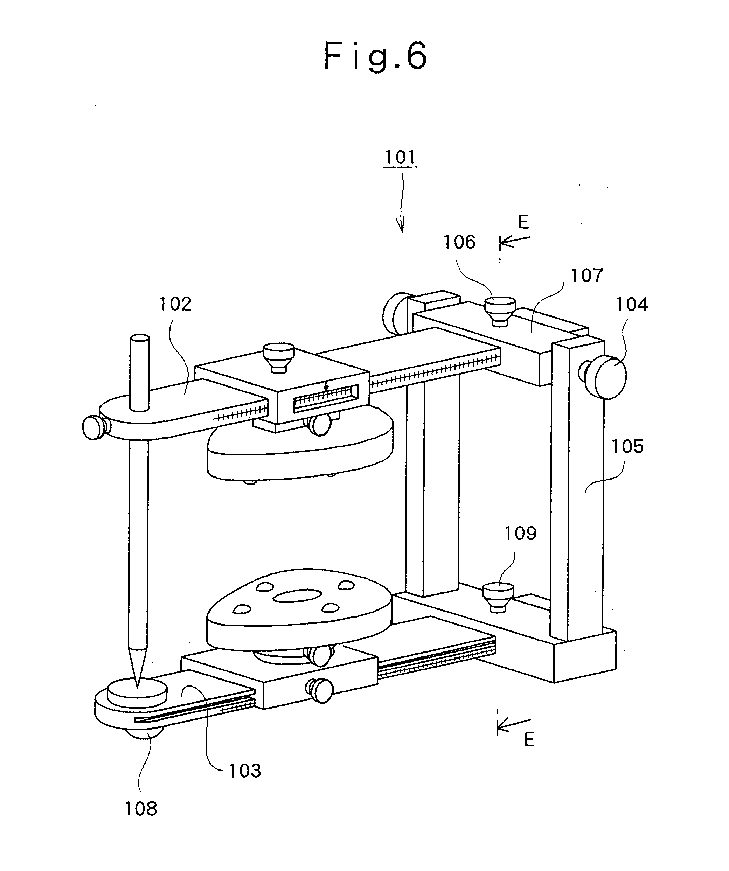

The perspective view of the other embodiment of the present invention is shown in Fig.6.

An articulator 101 of this embodiment is characterized in that the frame 102 and 103 respectively are slidably supported against the supporting shaft 104. Specifically, the frame 102 is turnably connected with the supporting frame 105 by the shaft 104 acting as the simulated junction and is able to connect with the supporting member 107 by tightening the setscrew 106.

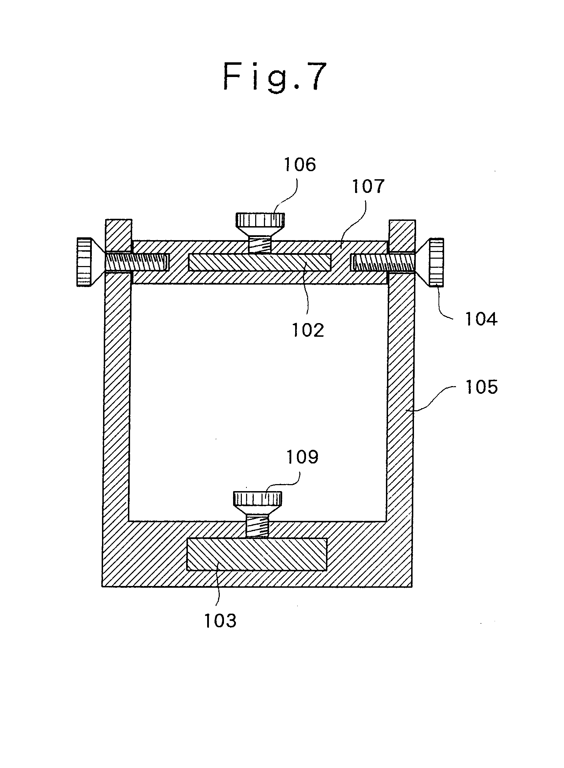

The shaft 104 may be replaced with the setscrew as shown in Fig.7 passed through the frame 105 and connected with the member 107 or the other structure being able to act as the simulated joint.

On the other hand, the frame 103 have a hemispherical spacer 108 at the top portion of the bottom surface thereof to stably place the articulator 101 on the table such as a workbench and to smoothly slide the frame 103 and, as shown in Fig.7, can be connected with the frame 105 by tightening the setscrew 109.

The other elements are substantially same as that of the articulator 1 shown in Fig.1.

In the elements of this embodiment, to change the position of the shaft 104 against the upper model and the lower model respectively would be carried out between the frame and the plate or between the frame and the supporting member (or the shaft).

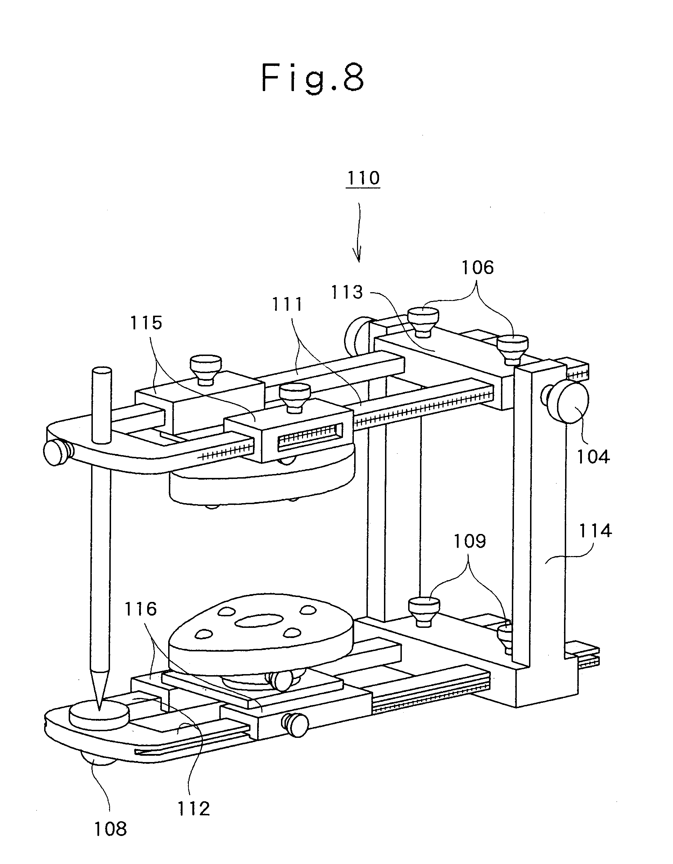

Fig.8 is a perspective view of the other embodiment of this embodiment and there is no difference from the articulator 101 shown in Fig.6 except for the structure of sliding the plates 115 and 116 respectively along with a longitudinal-direction of the branched frame 111 and 112, and the structure of the frames 111 and 112 supported by the supporting member 113 and the supporting frame 114.

### Example 3: The Elements of The Other Embodiment of The Articulator of The Present Invention

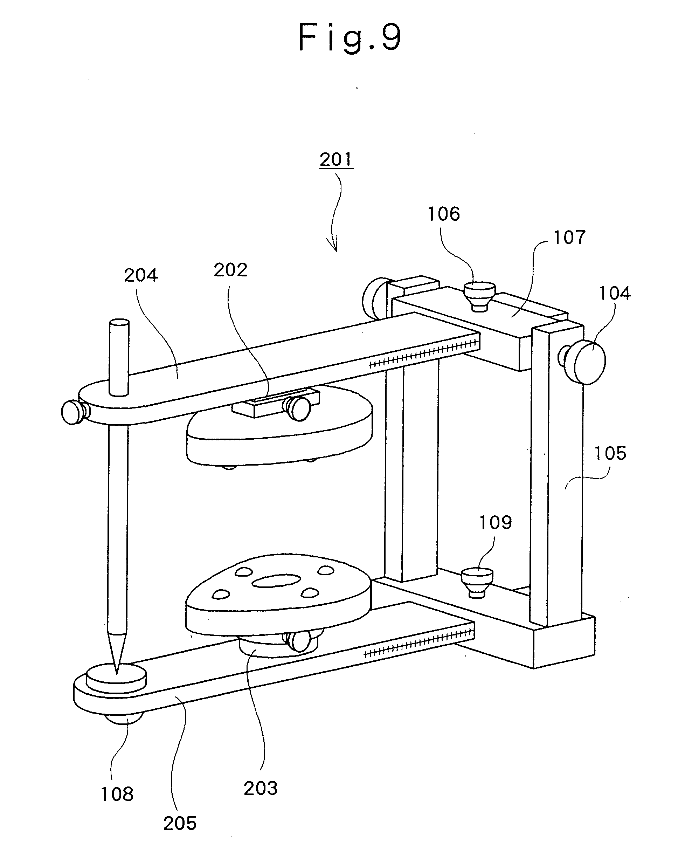

The perspective view of the other embodiment of the present invention is shown in Fig.9.

The elements of an articulator 201 of this embodiment are substantially same as that of the ariticulator 101 shown in Fig.6 except for the plates 202 and 203 fixed to the frames 204 and 205 respectively.

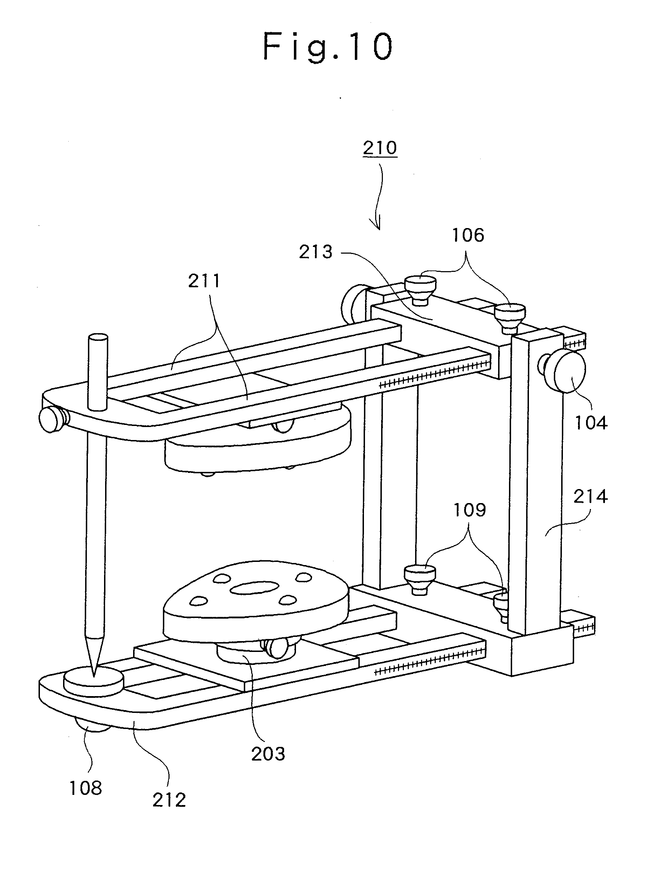

Fig.10 is a perspective view of the other embodiment of this embodiment and there is no difference from the articulator 201 shown in Fig.9 except for the structure of the frames 211 and 212 supported by the supporting member 213 and the supporting frame 214.

### Example 4: The Operation of The Articulator of The Present Invention

The operation method of the articulator of the present invention is explained in the following by referring to the Fig.3.

### (i) Mounting the upper and the lower jaw model on the articulator

First of all, a bite-taking is conducted by putting the wax bite between the upper and the lower teeth of the patient and closing the jaws. The wax bite obtained by the bite-taking is placed between the the upper and the lower teeth model and tying the models by a fine wire thread or the like to maintain the occlusion state of the models and to secure and unify the models each other.

Then, an undried mounting plaster 42 for connecting the model 26 to the stand 28 is prepared by mounting an appropriate amount of the plaster mud on the metal plate 41 placed on the magnet 40 buried in the stand 28, and the models unified previously is placed onto the plaster 42 before the plaster 42 is dried in consideration of the direction and the slope of the models.

A mounting plaster 37 is prepared by mounting an appropriate amount of the plaster mud on the top surface of the upper model 25 while the metal plate 44 is absorbed by the magnet 24 buried in the fixing stand 12, and the mounting of the upper and the lower jaw model on the articulator is completed by drying the plaster 37 in a pressing state of receiving the pin 10 by the cradle 8.

Although there is a method for making use of the incisor-papillae and the Hamler notches as a method for precisely placing the models, the method aforesaid of the present invention would seems to be self-explanatory, therefore the detailed description is omitted.

### (ii) Adjustment of the Position of the Upper and the Lower Models on the Articulator

Upon completing the mounting of the upper and the lower models on the articulator, the operator observe the movement of the patient's jaw and the models prepared and, judging from the observation, changes the distance appropriately between the models and the simulated joint by sliding the frames 3 and 5 respectively and corresponds the distance between the jaws of the organism and the center of the opening/closing motion. At the position of copleting the slide, an installation position of the models are decided by tightening the setscrew 15 and 33 respectively.

### (iii) By using the models mounted on the articulator in accordance with the method (i) and (ii), the dental product for a dental restorative substance, a dental prosthetic appliance and an orthodontic appliance are produced.

### (Industrial Applicability)

In accordance with the present invention, since the position of the both frames and that of the models mounted on the articulator are movable against the supporting shaft acting as a simulated joint, the relation of the distance between the human jaws and the center of the opening/closing motion of the jaws are reproduced. Therefore, an articulator of the primary object being able to change the vertical dimension to correspond to the organism on the articulator and to prepare the prosthetic appliance changed positively the position of the center of the opening/closing motion is provided.

## Claims

1. An articulator comprising;
a first setting frame for supporting the upper jaw model,
a base plate mounted slidably along with a longitudinal-direction of said first setting frame and having a fixing stand for placing the upper jaw model thereon,
a second setting frame for supporting the lower jaw model,
a base plate mounted slidably along with a longitudinal-direction of said second setting frame and having a fixing stand for placing the lower jaw model thereon, and
a supporting member for connecting the said first setting frame turnably with said second setting frame.

2. An articulator according to Claim 1, wherein said first setting frame and said second setting frame respectively are further supported slidably against said supporting member.

3. An articulator according to Claim 2, wherein said base plate mounted slidably along with a longitudinal-direction are fixed onto said first

setting frame and said second setting frame respectively.
